# EUROPÄISCHE PATENTSCHRIFT

(11) **EP 0 533 709 B1**
(45) Veröffentlichungstag und Bekanntmachung des Hinweises auf die Patenterteilung: **29.12.1993**
(21) Anmeldenummer: 91910294.7
(22) Anmeldetag: 05.06.1991
(51) Int. Cl.: H04B 5/00, G06K 7/08

(54) **VERFAHREN UND SYSTEM ZUM ÜBERTRAGEN VON ENERGIE UND DATEN**
PROCESS AND SYSTEM FOR TRANSMITTING ENERGY AND DATA
PROCEDE ET DISPOSITIF POUR LE TRANSFERT D'ENERGIE ET DE DONNEES

(30) Priorität: 12.06.1990 DE 4018814
(43) Veröffentlichungstag der Anmeldung: 31.03.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: KÜHN, Jürgen, D-4100 Duisburg 1 (DE); DALSASS, Karl-Günther, D-4530 Ibbenbühren (DE); SCHERER, Klaus, D-4000 Düsseldorf 1 (DE); VOLKWEIN, Bernd, D-4300 Essen 1 (DE)
(74) Vertreter: Schoppe, Fritz, Dipl.-Ing.
(86) Internationale Anmeldenummer: DE9100480
(87) Internationale Veröffentlichungsnummer: WO9120135

(56) Entgegenhaltungen:
- EP-A- 0 288 791
- EP-A- 0 320 015
- FR-A- 2 290 801
- GB-A- 2 129 138
- GB-A- 2 182 794

## Beschreibung

Die vorliegende Erfindung betrifft ein Verfahren zum Übertragen von Energie von einer Haupteinheit zu einer Nebeneinheit und zum bidirektionalen Übertragen von Daten zwischen der Haupteinheit und der Nebeneinheit und ein System, bestehend aus einer Haupteinheit und einer Nebeneinheit, zum Übertragen von Energie von der Haupteinheit zu der Nebeneinheit und zum bidirektionalen Übertragen von Daten zwischen der Haupteinheit und der Nebeneinheit.

Die GB-A-2182794 offenbart ein Energie- und Daten-Übertragungsverfahren der oben genannten Art. Von der Haupteinheit wird zur Nebeneinheit ein Taktsignal übertragen, das in Figur 10 in der ersten Zeile gezeigt ist. Ein Übertragungszyklus umfaßt jeweils 18 Taktbits, die jeweils ein in einer ersten Richtung übertragbares Datenwort von 8 Bit, ein in der Rückwärtsrichtung übertragbares Datenwort von 8 Bit sowie Umschaltdatenbits umfassen. Mit jedem Takt wird die übertragene Signalfrequenz, die in der zweiten Zeile der Figur 10 dargestellt ist, auf das Vorliegen einer "1" bzw. einer "0" abgetastet, wobei das auf diese Weise erfaßte, sequentiell empfangene Datenwort mit 8 Datenbits nach vollständigem Empfang des Datenwortes einem Komparator zugeführt wird, der dieses Datenwort mit einem vorab in einem Speicher abgelegten Datenwort vergleicht. Bei Übereinstimmung der beiden Datenworte wird ausgangsseitig eine logische "1" erzeugt. Wenn bei einem derartigen Übertragungsverfahren bzw. Übertragungssystem aufgrund einer beliebigen Störung auch nur ein einziges Bit des Datenwortes fehlerhaft erfaßt wird, wird das übertragene Datenwort nicht mehr erkannt.

Aus der EP-A-288 791 sind bereits ein Verfahren und ein System zum Übertragen von Energie von einer Haupteinheit zu einer Nebeneinheit und zum bidirektionalen Datenübertragen zwischen diesen Einheiten bekannt. Bei dem bekannten Verfahren findet abwechselnd eine Energieübertragung von der Haupteinheit zur Nebeneinheit bzw. eine Datenübertragung von einer Einheit zu der anderen Einheit statt. Die Übertragung von Energie und Daten findet in einem festen Zyklus statt. Jeder Zyklus beginnt mit einem Energieimpuls von vorbestimmter Dauer, der von der Haupteinheit zu der Nebeneinheit übertragen wird, um eine Energieversorgung der Nebenheinheit sicherzustellen. Nach Ablauf einer Abklingphase nach dem Abschalten des Energieimpulses folgt eine Umschaltphase, während der die Hauptelektronik durch Aussenden eines weiteren Energieimpulses die Datenrichtung zwischen der Haupteinheit und der Nebeneinheit für alle weiteren Datenzyklen umschalten kann. Erfolgt während dieser Umschaltphase keine Energieübertragung von der Haupteinheit zu der Nebeneinheit, so wird nach Verstreichen der genannten zweiten Abklingphase eine Datenübertragung in der zuvor festgelegten Datenübertragungsrichtung vorgenommen.

Die Übertragung von Daten zwischen der Haupteinheit und der Nebeneinheit findet in beiden Datenübertragungsrichtungen durch binäre Amplitudenumtastmodulation statt. Dies ermöglicht eine einfache Demodulation und eine hohe Störsicherheit. Bei diesem bekannten Verfahren und System ist es erforderlich, daß die Nebeneinheit ein eigenes frequenzbestimmendes Element aufweist, so daß sie nicht vollständig als anwenderspezifisch integrierte Schaltung implementiert werden kann. Ferner ist es erforderlich, daß die Nebeneinheit über einen Energiespeicher mit relativ hoher Kapazität verfügt, was gleichfalls einer Integration und einer kompakten Bauweise entgegensteht.

Aus der EP-A1-02 87 175 ist ein weiteres Verfahren und System zur Übertragung von Energie von einer Haupteinheit zu einer Nebenheinheit und zur bidirektionalen Datenübertragung zwischen diesen Einheiten bekannt. Bei diesem System findet eine gleichzeitige Übertragung von Energie und Daten statt. Bei der Datenübertragung von der Haupteinheit zur Teileinheit wird ein Träger amplitudenmoduliert, wobei, wie später erläutert wird, für jedes zu übertragende Datenbit acht Bits (ein Byte) auf einen hochfrequenten Träger moduliert werden. In der Nebeneinheit wird mittels eines Spannungsteilers aus dem empfangenen, modulierten Signal ein Taktsignal und ein Datensignal gewonnen, um eine übertragene "0" mit einer ersten kleinen Amplitude von einer übertragenen "1" mit einer zweiten, großen Amplitude unterscheiden zu können. Daher ist es erforderlich, eine Anpassung der Sendeleistung der Haupteinheit an die Dämpfung der jeweiligen Übertragungsstrecke vorzunehmen.

Die Übertragung von Daten von der Nebeneinheit zur Haupteinheit erfolgt dadurch, daß seitens der Nebeneinheit eine Laständerung an der Sekundärspule mit der halben Trägerfrequenz vorgenommen wird. Die Phasenlage des Schaltens der Laständerung an der Sekundärspule bestimmt den Zustand des rückübertragenen Bits. Um eine synchrone Ablaufsteuerung in der Haupteinheit und in der Nebeneinheit zu erzielen, werden für die Übertragung eines jeden Datenbits von der Haupteinheit zwei Startbits, ein Datenbit mit seinem Komplementärwert, ein Taktbit mit seinem Komplementärwert und zwei Stoppbits übertragen. Nach der Übertragung dieser Bits wird der Träger für eine Zeitdauer von acht Schwingungen des Trägers nicht moduliert. Während dieser Zeit findet die Datenrückübertragung durch Rücksenden eines Datenbits mit der oben beschriebenen Laständerung der Sekundärspule statt.

Aus der EP-A2-03 20 015 ist ein weiteres Verfahren und System zum Übertragen von Energie von einer Haupteinheit zu einer Nebeneinheit und zum bidirektionalen Datenübertragen zwischen diesen Einheiten bekannt. Die Datenübertragung von der Haupteinheit zur Nebeneinheit erfolgt durch Pulsdauermodulation eines hochfrequenten Versorgungsspannungssignales mittels dreier verschiedener Puls-Pausen-Verhältnisse,die einer übertragenen "1", einer übertragenen "0" bzw. dem Abrufen eines Bits von der Nebeneinheit entsprechen. Das Rückübertragen von Daten von der Nebeneinheit zur Haupteinheit erfolgt durch Kurzschließen der Sekundärspule in der Abklingphase nach dem übertragenen Puls von der Haupteinheit zur Nebeneinheit, wodurch sich der Abklingpegel der Primärspulenspannung ändert. Ein Vergleicher in der Haupteinheit entscheidet zu einem festgelegten Zeitpunkt innerhalb des Übertragungszyklus, ob der Wert der Primärspulenspannung der Rücksendung einer "1" oder "0" von der Nebeneinheit zur Haupteinheit entspricht.

Aus der EP-A2-01 85 610 ist wiederum ein weiteres Verfahren und System zum Übertragen von Energie von einer Haupteinheit zu einer Nebeneinheit und zum bidirektionalen Datenübertragen zwischen diesen Einheiten bekannt. Die Datenübertragung von der Haupteinheit zur Nebeneinheit erfolgt durch Modulation der gegenseitigen Phasenlage zweier kohärenter Versorgungsspannungsschwingungen. Die Datenübertragung in der entgegengesetzten Richtung erfolgt durch Laständerungen an den Spulen der Nebeneinheit. Damit ist eine gleichzeitige bidirektionale Datenübertragung möglich. Für die Übertragung der beiden kohärenten Signale bedarf es zweier räumlich getrennter Spulenpaare.

Aus der US-C-47 30 188 ist ein anderes Verfahren und System zum Übertragen von Energie von einer Haupteinheit zu einer Nebeneinheit und zum unidirektionalen Übertragen von Daten von der Nebeneinheit zur Haupteinheit bekannt. Die Haupteinheit sendet ständig ein hochfrequentes Versorgungswechselsignal aus. Die von der Nebeneinheit zur Haupteinheit zu sendenden Daten werden durch Frequenzumtastung mit Manchester-Codierung moduliert. Zwar bedarf es bei diesem System keines eigenen Oszillators und keines eigenen Energiespeichers in der Nebeneinheit, so daß diese in einfacher Weise als integrierte Schaltung ausgeführt werden kann, jedoch ist dieses System auf eine unidirektionale Datenübertragung beschränkt.

Aus der DE-A1-36 31 477 ist bereits ein Netzwerk für die Daten- und Energieübertragung bekannt, welches ein Netzwerk aufweist, an das eine Mehrzahl von gleichstrukturierten Einheiten angeschlossen ist. Das Netzwerk wird von einem zentralen Speisegerät mit Energie versorgt. Das Speisegerät dient allein der Energieversorgung mit Wechselspannung. Die Datenübertragung zwischen den einzelnen Einheiten erfolgt dadurch, daß jeweils eine Einheit auf das Netzwerk zugreift, um das dort anliegende Wechselspannungssignal mit einer Amplitudenmodulation zu beaufschlagen.

Aus der EP-A2-01 95 626 ist bereits ein Nachrichtenübertragungssystem bekannt, bei dem im Frequenzumtastverfahren modulierte Nachrichten von einer Nebeneinheit zu einer Haupteinheit übertragen werden.

Aus der Fachzeitschrift "Technisches Messen", 1989, Heft 4, Seiten 164 bis 170 ist es bekannt, zum Zwecke der Energieübertragung von einer Haupteinheit zu dezentralen Sensoren Lichtwellenleiter einzusetzen.

Ausgehend von dem oben beschriebenen Stand der Technik liegt der vorliegenden Erfindung die Aufgabe zugrunde, ein Verfahren und System zum Übertragen von Energie von einer Haupteinheit zu einer Nebeneinheit und zum bidirektionalen Übertragen von Daten zwischen diesen Einheiten so weiterzubilden, daß die Nebeneinheit einfach und kompakt aufgebaut ist und daß eine sichere Übertragung der Daten in beide Datenübertragungsrichtungen gewährleistet ist.

Diese Aufgabe wird durch Verfahren mit den in den Patentansprüchen 1 oder 2 angegebenen Verfahrensschritten und durch Systeme mit den in den Patentansprüchen 6 oder 7 angegebenen Merkmalen gelöst.

Bevorzugte Weiterbildungen des erfindungsgemäßen Verfahrens sind in den Ansprüchen 3 bis 5 und des erfindungsgemäßen Systemes in den Ansprüchen 8 bis 11 angegeben.

Ein bevorzugtes Ausführungsbeispiel des erfindungsgemäßen Übertragungssystemes, das nach dem erfindungsgemäßen Übertragungsverfahren arbeitet, wird nachfolgend unter Bezugnahme auf die beiliegenden Zeichnungen näher erläutert.

Es zeigen:
- Fig. 1: ein Übersichtsdiagramm des Übertragungssystemes;
- Fig. 2: ein Blockdiagramm eines Ausführungsbeispieles der Nebeneinheit;
- Fig. 3: ein Blockdiagramm eines Ausführungsbeispieles der Haupteinheit; und
- Fig. 4: ein zeitliches Ablaufdiagramm zur Erläuterung des erfindungsgemäßen Übertragungsverfahrens.

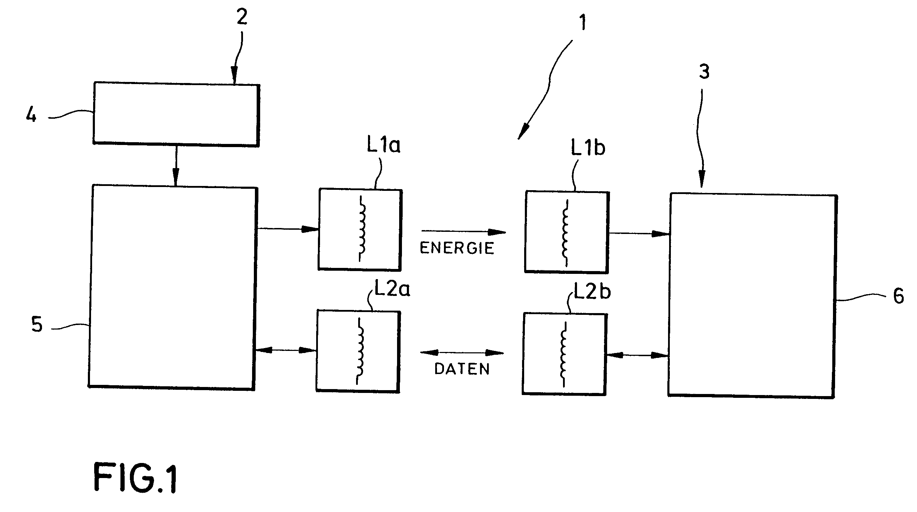

Das in Fig. 1 in seiner Gesamtheit mit dem Bezugszeichen 1 bezeichnete System zum Übertragen von Daten und Energie umfaßt eine Haupteinheit 2 und eine Nebeneinheit 3. Die Haupteinheit 2 umfaßt eine Stromversorgungseinheit 4 für die Versorgung einer Hauptschaltungseinrichtung 5, die mit einem ersten und einem zweiten Koppelelement L1a, L2a verbunden ist. Die Nebeneinheit 3 umfaßt eine Nebenschaltungseinrichtung 6, die mit einem dritten und vierten Koppelelement L1b, L2b verbunden ist.

Eine Energieübertragung von der Haupteinheit 2 zu der Nebeneinheit 3 findet über das erste und dritte Koppelelement L1a, L1b statt. Eine bidirektionale Datenübertragung zwischen der Haupteinheit 2 und der Nebeneinheit 3 erfolgt über das zweite und vierte Koppelelement L2a, L2b.

Für den Fachmann ist es offensichtlich, daß sowohl für die Datenübertragung wie auch für die Energieübertragung jegliche Art von berührungsfreien Koppelelementen für die induktive oder kapazitive oder optische Kopplung geeignet sind.

Bei dem bevorzugten, gezeigten Ausführungsbeispiel haben die Koppelelemente L1a, L1b, L2a, L2b die Form von Spulen für die Erzeugung einer induktiven Kopplung.

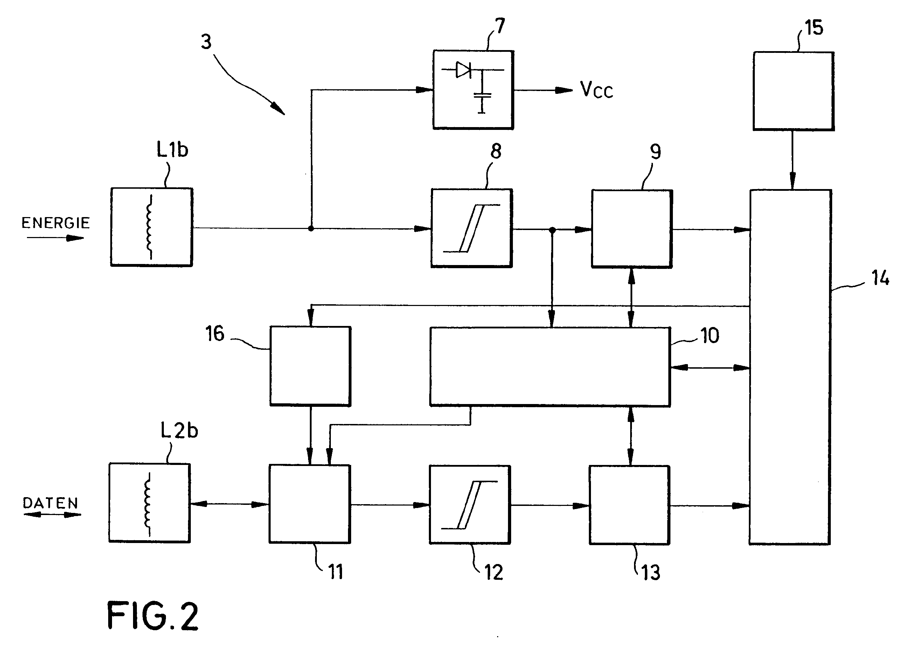

Wie in Fig. 2 gezeigt ist, umfaßt die Nebeneinheit 3 eine Gleichrichterschaltung 7, die das von dem dritten Koppelelement L1b empfangene Versorgungswechselsignal in eine Versorgungsgleichspannung V_{cc} umwandelt. Dem dritten Koppelelement L1b ist ferner eine erste Signalformerschaltung 8 nachgeschaltet, die das empfangene, im wesentlichen sinusförmige Signal in ein im wesentlichen rechteckförmiges Taktsignal umwandelt, welches einerseits einem Referenzzähler 9 und andererseits einer Ablaufsteuerschaltung 10 zugeführt wird.

Dem vierten Koppelelement L2b ist ein erster Sende-/Empfangs-Umschalter 11 nachgeschaltet, dessen Schaltzustand von der Ablaufsteuerschaltung 10 bestimmt wird. In seiner Empfangsstellung verbindet der erste Sende-/Empfangs-Umschalter 11 das vierte Koppelelement L2b mit einer zweiten Signalformerschaltung 12, die eingangsseitig mit einem Datenzähler 13 verbunden ist. Ein Mikroprozessor 14 steht ausgangsseitig sowohl mit dem Referenzzähler 9 wie auch mit dem Datenzähler 13 in Verbindung und ist ferner mit der Ablaufsteuerschaltung 10 zum gegenseitigen Datenaustausch verbunden.

In an sich üblicher Weise hat der Mikroprozessor 14 eine Rücksetzlogikschaltung 15, die den Mikroprozessor beispielsweise bei einem anfänglichen Anlegen der Versorgungsspannung V_{cc} sowie im Falle des Auftretens von unerwünschten Programmzuständen rücksetzt.

Eine Frequenzumtastschaltung 16 für die Rückübertragung von Daten von der Nebeneinheit 3 zu der Haupteinheit 2 wird von dem Mikroprozessor 14 für eine binäre Frequenzumtastung je nach dem logischen Wert des rückzuübertragenden Bits angesteuert und steht ausgangsseitig mit dem ersten Sende-/Empfangs-Umschalter 11 in Verbindung, der die Frequenzumtastschaltung 16 in seiner Sendestellung mit dem vierten Koppelelement L2b verbindet.

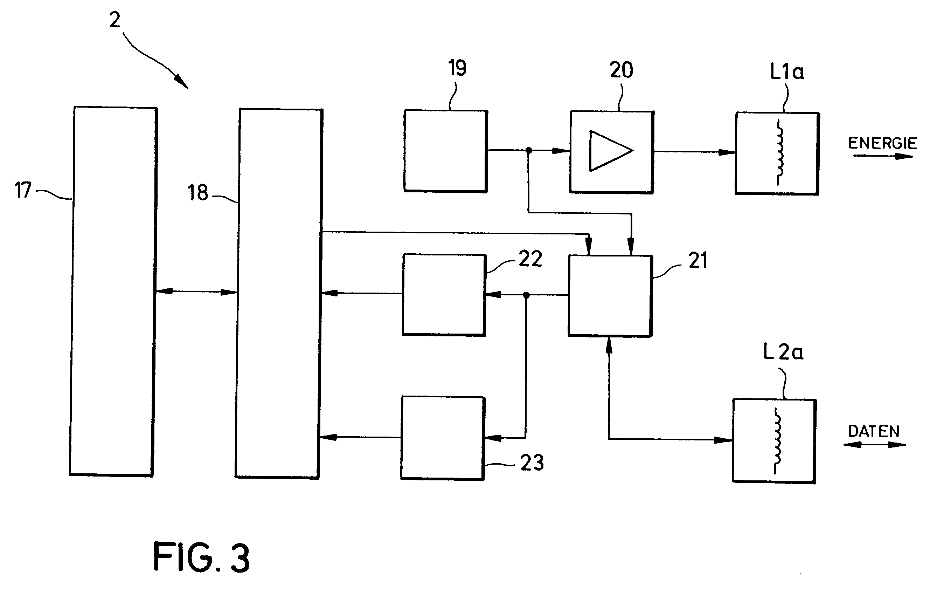

Wie in Fig. 3 gezeigt ist, umfaßt die Haupteinheit 2 einen Hostcomputer 17, der mit einem zweiten Mikroprozessor 18 in Datenübertragungsverbindung steht.

Ferner umfaßt die Haupteinheit 2 einen Oszillator 19, der mit einem Leistungsverstärker 20 verbunden ist, welcher ausgangsseitig mit dem ersten Koppelelement L1a zum Übertragen eines hochfrequenten Versorgungswechselsignales zu der Nebeneinheit 3 verbunden ist.

Das Ausgangssignal des Oszillators 19 wird in Abhängigkeit von einer von dem zweiten Mikroprozessor 18 festgelegten Torzeit oder Einschaltzeit in der Sendestellung eines zweiten Sende-/Empfangs-Umschalters 21 dem zweiten Koppelelement L2a zugeführt. Wie später noch im einzelnen erläutert wird, entspricht eine kurze bzw. lange Torzeit der Durchschaltung des Ausgangssignales des Oszillators 19 zu dem zweiten Koppelelement L2a der Übertragung eines ersten oder zweiten binären Datenwertes von der Haupteinheit 2 zu der Nebeneinheit 3.

Anstelle der unterschiedlich langen Beaufschlagung des zweiten Koppelelementes mit einem Ausgangssignal eines Oszillators von vorbestimmter Frequenz ist es in Abweichung von dem gezeigten Ausführungsbeispiel möglich, einen ersten bzw. einen zweiten Oszillator mit einer ersten bzw. zweiten Frequenz während einer jeweils gleichen Torzeit zur Übertragung des ersten oder zweiten Binärwertes mit dem zweiten Koppelelement L2a zu verbinden.

In der durch den zweiten Mikroprozessor 18 festgelegten Empfangsstellung des zweiten Sende-/Empfangs-Umschalters 21 verbindet dieser das zweite Koppelelement L2a mit einer ersten phasenstarren Regelschleife 22 und einer zweiten phasenstarren Regelschleife 23, die jeweils ausgangsseitig mit dem zweiten Mikroprozessor 18 verbunden sind. Die erste phasenstarre Regelschleife 22 spricht auf Signale der ersten Frequenz an, die die Frequenzumtastschaltung 16 der Nebeneinheit 3 erzeugt, während die zweite phasenstarre Regelschleife 23 auf Signale der zweiten Frequenz von der Frequenzumtastschaltung 16 anspricht.

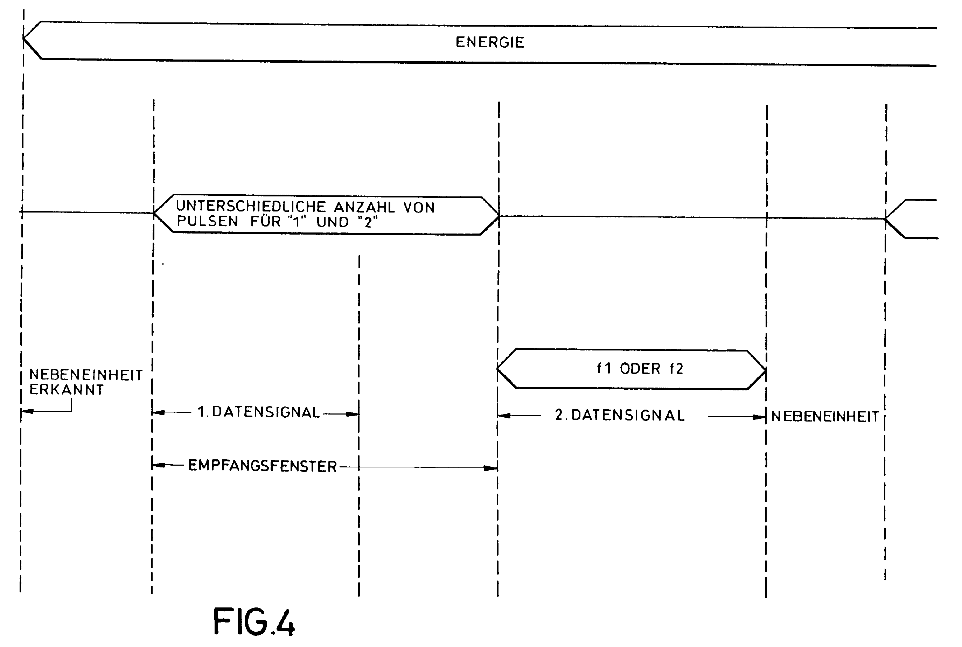

Nachfolgend wird unter Bezugnahme auf die Fig. 2 bis 4 das Übertragungsverfahren näher erläutert. Es findet beginnend ab einem Einschalten der Haupteinheit eine kontinuierliche Energieübertragung in Form des hochfrequenten Versorgungswechselsignales von der Haupteinheit 2 zu der Nebeneinheit 3 statt. In der Nebeneinheit 3 wird durch die erste Signalformerschaltung 8 ein Taktsignal generiert, mit dem der Referenzzähler 9 getaktet bzw. inkrementiert wird. Nach dem Empfangen eines Datensignales von der Haupteinheit durch die Nebeneinheit wird der Datenzähler 13 entsprechend den Schwingungen des übertragenen Datensignales hochgezählt, wobei ab dem Empfang des Datensignales und somit ab dem Beginn des Zählens des Datenzählers 13 die Ablaufsteuerschaltung 10 den Referenzzähler 9 zählen läßt. Der Referenzzähler 9 dient zur Definition eines Zeitfensters mit einer von dem Taktsignal festgelegten Zeitbasis.

Sobald der Zählwert des Referenzzählers 9 einen dem Ende des Zeitfensters entsprechenden Maximalwert oder Zählendwert erreicht hat, bewirkt der Mikroprozessor 14 ein Auslesen des Datenzählers 13 zu diesem Zeitpunkt. Zum Ablauf des Zeitfensters schaltet der erste Mikroprozessor 14 den ersten Sende-/Empfangs-Umschalter 11 um, um eine Rückübertragung von Daten von der Nebeneinheit 3 zu der Haupteinheit 2 einzuleiten. Entsprechend des zu übertragenden Datenwertes erzeugt die Frequenzumtastschaltung 16 nun ein Sendesignal mit einer von zwei Sendefrequenzen. Der zweite Mikroprozessor 18 der Haupteinheit hat nach Beendigung der Datenübertragung zu der Nebeneinheit 3 den zweiten Sende-/Empfangs-Umschalter 21 umgeschaltet, so daß entweder die erste oder die zweite phasenstarre Regelschaltung 22, 23 auf das von der Nebeneinheit 3 ausgesandte Signal anspricht, was wiederum von dem zweiten Mikroprozessor 18 erfaßt wird. Hiermit ist die Datenrückübertragung abgeschlossen.

Bei dem erfindungsgemäßen Verfahren können selbstverständlich pro Übertragung in die jeweilige Datenrichtung mehr als nur ein Bit übertragen werden, soweit der Datenzähler 13 eine ausreichende Kapazität hat und die Übertragungsstrecke ausreichend sicher ist. Für eine Mehr-Bit-Datenrückübertragung bedarf es anstelle einer binären Frequenzumtastung einer entsprechenden mehrfachen Frequenzumtastung mit geeigneter mehrfacher phasenstarrer Regelschleife.

Das erfindungsgemäße Verfahren und System ermöglichen einen sehr niedrigen Schaltungsaufwand auf der Seite der Nebeneinheit 3, die neben Komparatoren und Grundgattern fast ausschließlich mit Flipflops zum Realisieren von Zählern und Teilern implementiert werden kann. Dadurch ist es leicht möglich, die Nebeneinheit als anwenderspezifische integrierte Schaltung auszuführen.

Bei dem erfindungsgemäßen Übertragungsverfahren findet eine Zwangssynchronisation statt. Hierbei bestimmt die Haupteinheit den Startzeitpunkt eines Zyklus und die Nebenheit das Ende desselben. Aufgrund dieser Charakteristika des Übertragungsverfahrens können sowohl die Haupteinheit als auch die Nebeneinheit vor einer jeweiligen Datenübertragung die jeweils andere Einheit warten lassen, um bestimmte zeitkritische Aufgaben zu erledigen.

Das erfindungsgemäße Verfahren zeichnet sich ferner durch eine hohe Übertragungssicherheit aus. Durch geeignete Wahl des Zeitfensters kann eine nahezu beliebig große Übertragungssicherheit erreicht werden. Falls das schaltungsmäßig festgelegte Zeitfenster groß genug gewählt ist, kann durch eine geeignete Software eine Interpretation des Datenzählerinhaltes in der Weise erfolgen, daß beispielsweise Bits paarweise übertragen werden oder daß der Datenzählerinhalt direkt einem Byte entspricht. Selbstverständlich führt dies jedoch zu einer Reduktion der erzielbaren Übertragungssicherheit.

Auch die Datenübertragung von der Nebeneinheit zur Haupteinheit ist aufgrund des gewählten Frequenzumtastmodulationsverfahrens störungsunempfindlich.

Dadurch, daß die Nebeneinheit nach jedem empfangenen Bit ein Bit zurücksenden kann, ist die Übertragung eines Bytes in beiden Datenrichtungen fast gleichzeitig möglich.

## Patentansprüche

1. Verfahren zum Übertragen von Energie von einer Haupteinheit zu einer Nebeneinheit und zum bidirektionalen Übertragen von Daten zwischen der Haupteinheit und der Nebeneinheit,
mit folgenden Verfahrensschritten:
- Übertragen der Energie als Versorgungswechselsignal von vorbestimmter Frequenz von der Haupteinheit (2) zu der Nebeneinheit (3);
- Erzeugen eines Taktsignales für die Nebeneinheit aus dem von der Haupteinheit (2) zu der Nebeneinheit (3) übertragenen Versorgungswechselsignal;
- Übertragen eines ersten Datensignales von der Haupteinheit (2) zu der Nebeneinheit (3); und
- Rückübertragen eines zweiten Datensignales von der Nebeneinheit (3) zu der Haupteinheit (2);
gekennzeichnet durch folgende Verfahrensschritte:
- Zählen der Anzahl von Schwingungen des Taktsignales ab dem Beginn des Empfangens des ersten Datensignales;
- Zählen der Anzahl von Schwingungen des ersten Datensignales;
- Anhalten der Zählung der Schwingungen des ersten Datensignales, sobald bei der Zählung der Schwingungen des Taktsignales ein vorbestimmter Zählwert, der einem Zeitfenster entspricht, erreicht ist; und
- Bestimmen des empfangenen ersten Datenwertes aufgrund des Zählwertes;
- wobei das Rückübertragen eines zweiten Datensignales von der Nebeneinheit (3) zu der Haupteinheit (2) erfolgt, sobald bei der Zählung des Taktsignales der vorbestimmten Zählwert, der dem Zeitfenster entspricht, erreicht wird.

2. Verfahren zum Übertragen von Energie von einer Haupteinheit zu einer Nebeneinheit und zum bidirektionalen Übertragen von Daten zwischen der Haupteinheit und der Nebeneinheit,
mit folgenden Verfahrensschritten:
- Übertragen der Energie als Versorgungswechselsignal von vorbestimmter Frequenz von der Haupteinheit (2) zu der Nebeneinheit (3);
- Erzeugen eines Taktsignales für die Nebeneinheit aus dem von der Haupteinheit (2) zu der Nebeneinheit (3) übertragenen Versorgungswechselsignal;
- Übertragen eines ersten Datensignales von der Haupteinheit (2) zu der Nebeneinheit (3); und
- Rückübertragen eines zweiten Datensignales von der Nebeneinheit (3) zu der Haupteinheit (2);
gekennzeichnet durch folgende Verfahrensschritte:
- Zählen der Anzahl von Schwingungen des Taktsignales ab dem Beginn des Empfangens des ersten Datensignales;
- Zählen der Anzahl von Schwingungen des ersten Datensignales;
- Anhalten der Zählung der Schwingungen des ersten Datensignales, sobald bei der Zählung der Schwingungen des Taktsignales ein vorbestimmter Zählwert, der einem Zeitfenster entspricht, erreicht ist; und
- Bestimmen des empfangenen ersten Datenwertes aufgrund des Zählwertes;
- wobei das Rückübertragen eines zweiten Datensignales von der Nebeneinheit (3) zu der Haupteinheit (2) erfolgt, sobald die Übertragung des ersten Datensignales von der Haupteinheit (2) zu der Nebeneinheit (3) beendet ist.

3. Verfahren nach Anspruch 1 oder 2, dadurch gekennzeichnet,
- daß die Nebeneinheit (3) das zweite Datensignal durch Frequenzumtastung mittels wenigstens zweier Frequenzen moduliert.

4. Verfahren nach einem der Ansprüche 1 bis 3, dadurch gekennzeichnet,
- daß die Haupteinheit das erste Datensignal dadurch moduliert, daß sie ein Signal von fester Frequenz mit einer von den Daten abhängigen Schwingungsdauer erzeugt.

5. Verfahren nach einem der Ansprüche 1 bis 3, dadurch gekennzeichnet,
- daß die Haupteinheit (2) das erste Datensignal durch Frequenzumtastung moduliert.

6. System, bestehend aus einer Haupteinheit (2) und einer Nebeneinheit (3), zum Übertragen von Energie von der Haupteinheit (2) zu der Nebeneinheit (3) und zum bidirektionalen Übertragen von Daten zwischen der Haupteinheit (2) und der Nebeneinheit (3),
- wobei die Haupteinheit (2) folgende Merkmale aufweist:
-- einen Oszillator (19) zum Erzeugen eines Versorgungswechselsignales von vorbestimmter Frequenz;
-- eine erste Sendeeinrichtung (18, 19, 21) zum Übertragen eines ersten Datensignales von der Haupteinheit (2) zu der Nebeneinheit (3); und
-- eine erste Empfangseinrichtung (22, 23, 18) zum Empfangen eines zweiten Datensignales von der Nebeneinheit (3); und
- wobei die Nebeneinheit (3) folgende Merkmale aufweist:
-- eine Taktsignalerzeugungseinrichtung (8) zum Erzeugen eines Taktsignales aus dem von der Haupteinheit (2) zu der Nebeneinheit (3) übertragenen Versorgungswechselsignal; und
-- eine zweite Sendeeinrichtung (14, 16) zum Übertragen eines zweiten Datensignales von der Nebeneinheit (3) zu der Haupteinheit (2);
dadurch gekennzeichnet, daß die Nebeneinheit (3) ferner folgende Merkmale aufweist:
-- einen Referenzzähler (9) zum Erzeugen eines Zeitfensters, welcher bei Empfang des ersten Datensignales aktiviert wird und Pulse des Taktsignales zählt und bis zum Erreichen eines dem Zeitfenster entsprechenden Zählwertes ein Zeitfenstersignal erzeugt; und
-- einen Datenzähler (13), der die Schwingungen des ersten Datensignales während des Vorliegens des Zeitfenstersignales zählt;
-- wobei die zweite Sendeeinrichtung (14, 16) zum Übertragen eines zweiten Datensignales von der Nebeneinheit (3) zu der Haupteinheit (2) auf den Ablauf des Zeitfensters anspricht, um das zweite Datensignal von der Nebeneinheit (3) zu der Haupteinheit (2) zu übertragen.

7. System, bestehend aus einer Haupteinheit (2) und einer Nebeneinheit (3), zum Übertragen von Energie von der Haupteinheit (2) zu der Nebeneinheit (3) und zum bidirektionalen Übertragen von Daten zwischen der Haupteinheit (2) und der Nebeneinheit (3),
- wobei die Haupteinheit (2) folgende Merkmale aufweist:
-- einen Oszillator (19) zum Erzeugen eines Versorgungswechselsignales von vorbestimmter Frequenz;
-- eine erste Sendeeinrichtung (18, 19, 21) zum Übertragen eines ersten Datensignales von der Haupteinheit (2) zu der Nebeneinheit (3); und
-- eine erste Empfangseinrichtung (22, 23, 18) zum Empfangen eines zweiten Datensignales von der Nebeneinheit (3); und
- wobei die Nebeneinheit (3) folgende Merkmale aufweist:
-- eine Taktsignalerzeugungseinrichtung (8) zum Erzeugen eines Taktsignales aus dem von der Haupteinheit (2) zu der Nebeneinheit (3) übertragenen Versorgungswechselsignal; und
-- eine zweite Sendeeinrichtung (14, 16) zum Übertragen eines zweiten Datensignales von der Nebeneinheit (3) zu der Haupteinheit (2);
dadurch gekennzeichnet, daß die Nebeneinheit (3) ferner folgende Merkmale aufweist:
-- einen Referenzzähler (9) zum Erzeugen eines Zeitfensters, welcher bei Empfang des ersten Datensignales aktiviert wird und Pulse des Taktsignales zählt und bis zum Erreichen eines dem Zeitfenster entsprechenden Zählwertes ein Zeitfenstersignal erzeugt; und
-- einen Datenzähler (13), der die Schwingungen des ersten Datensignales während des Vorliegens des Zeitfenstersignales zählt;
-- wobei die zweite Sendeeinrichtung (14, 16) zum Übertragen eines zweiten Datensignales von der Nebeneinheit (3) zu der Haupteinheit (2) auf die Beendigung der Übertragung des ersten Datensignales von der Haupteinheit (2) zu der Nebeneinheit (3) anspricht, um das zweite Datensignal von der Nebeneinheit (3) zu der Haupteinheit (2) zu übertragen.

8. System nach Anspruch 6 oder 7, dadurch gekennzeichnet,
- daß sowohl die Haupteinheit (2) als auch die Nebeneinheit (3) je ein Energie- bzw. Daten-Übertragungselement (L1a, L1b; L2a, L2b) für die Übertragung von Energie von der Haupteinheit (2) zu der Nebeneinheit (3) und für die bidirektionale Übertragung von Daten zwischen diesen aufweisen.

9. System nach Anspruch 8, dadurch gekennzeichnet,
- daß die Nebeneinheit (3) ferner folgende Merkmale aufweist:
-- eine erste digitale Steuervorrichtung (10, 14, 15);
-- einen an die erste digitale Steuervorrichtung (10, 14, 15) und an das Daten-Übertragungselement (L2b) der Nebeneinheit (3) angeschlossenen ersten Sende-/ Empfangs-Umschalter (11);
-- eine dem ersten Sende-/Empfangs-Umschalter (11) nachgeschaltete erste Signalformerschaltung (12), die ausgangsseitig mit dem Datenzähler (13) verbunden ist, der seinerseits ausgangsseitig mit der ersten digitalen Steuervorrichtung (10, 14, 15) verbunden ist;
-- eine an das Energie-Übertragungselement (L1b) angeschlossene Gleichrichterschaltung (7); und
-- eine ebenfalls an das Energie-Übertragungselement (L1b) angeschlossene zweite Signalformerschaltung (8), die ausgangsseitig mit dem Referenzzähler (9) verbunden ist, der seinerseits ausgangsseitig mit der ersten digitalen Steuervorrichtung (10, 14, 15) verbunden ist.

10. System nach Anspruch 9, dadurch gekennzeichnet,
- daß die zweite Sendeeinrichtung eine Frequenzumtastschaltung (16) aufweist, die eingangsseitig mit der digitalen Steuervorrichtung (10, 14, 15) und ausgangsseitig mit dem ersten Sende-/Empfangs-Umschalter (11) verbunden ist.

11. System nach einem der Ansprüche 6 bis 10, dadurch gekennzeichnet,
- daß die Haupteinheit (2) ferner folgende Merkmale aufweist:
-- eine zweite digitale Steuervorrichtung (17, 18);
-- einen an die zweite digitale Steuervorrichtung (17, 18) und an das Daten-Übertragungselement (L2a) der Haupteinheit (2) angeschlossenen zweiten Sende-/ Empfangs-Umschalter (21);
--- der in seiner Sendestellung den Oszillator (19) während einer von der zweiten digitalen Steuervorrichtung (17, 18) entsprechend der zu sendenden Daten vorgegebenen Torzeit mit dem Datenübertragungselement (L2a) der Haupteinheit (2) verbindet, und
--- der in seiner Empfangsstellung das Datenübertragungselement (L2a) der Haupteinheit (2) mit einer ersten und einer zweiten phasenstarren Regelschleife (22, 23) verbindet, welche ausgangsseitigt mit der zweiten digitalen Steuervorrichtung (17, 18) verbunden sind.

## Claims

1. A process for transmitting energy from a main unit to an auxiliary unit and for transmitting data bidirectionally between said main unit and said auxiliary unit,
comprising the following process steps:
- transmitting energy as an alternating supply signal of predetermined frequency from the main unit (2) to the auxiliary unit (3);
- generating a clock signal for the auxiliary unit on the basis of the alternating supply signal transmitted from the main unit (2) to the auxiliary unit (3);
- transmitting a first data signal from the main unit (2) to the auxiliary unit (3); and
- retransmitting a second data signal from the auxiliary unit (3) to the main unit (2);
characterized by the following process steps:
- counting the number of oscillations of the clock signal from the moment at which the reception of the first data signal begins;
- counting the number of oscillations of the first data signal;
- stopping the operation of counting the oscillations of the first data signal as soon as a predetermined count, which corresponds to a time window, has been reached in the operation of counting the oscillations of the clock signal; and
- determining the received first data value on the basis of the count;
- the retransmission of a second data signal from the auxiliary unit (3) to the main unit (2) being effected as soon as the predetermined count, which corresponds to the time window, has been reached in the counting operation of the clock signal.

2. A process for transmitting energy from a main unit to an auxiliary unit and for transmitting data bidirectionally between said main unit and said auxiliary unit,
comprising the following process steps:
- transmitting energy as an alternating supply signal of predetermined frequency from the main unit (2) to the auxiliary unit (3);
- generating a clock signal for the auxiliary unit on the basis of the alternating supply signal transmitted from the main unit (2) to the auxiliary unit (3);
- transmitting a first data signal from the main unit (2) to the auxiliary unit (3); and
- retransmitting a second data signal from the auxiliary unit (3) to the main unit (2);
characterized by the following process steps:
- counting the number of oscillations of the clock signal from the moment at which the reception of the first data signal begins;
- counting the number of oscillations of the first data signal;
- stopping the operation of counting the oscillations of the first data signal as soon as a predetermined count, which corresponds to a time window, has been reached in the operation of counting the oscillations of the clock signal; and
- determining the received first data value on the basis of the count;
- the retransmission of a second data signal from the auxiliary unit (3) to the main unit (2) being effected as soon as the transmission of the first data signal from said main unit (2) to said auxiliary unit (3) has been finished.

3. A process according to claim 1 or 2, characterized in
- that the auxiliary unit (3) modulates the second data signal by frequency shift keying by means of at least two frequencies.

4. A process according to one of the claims 1 to 3, characterized in
- that the main unit modulates the first data signal by producing a signal of fixed frequency with an oscillation period depending on the data.

5. A process according to one of the claims 1 to 3, characterized in
- that the main unit (2) modulates the first data signal by frequency shift keying.

6. A system comprising a main unit (2) and an auxiliary unit (3) and used for transmitting energy from said main unit (2) to said auxiliary unit (3) and for transmitting data bidirectionally between said main unit (2) and said auxiliary unit (3),
- said main unit (2) having the following features:
-- an oscillator (19) for producing an alternating supply signal of predetermined frequency;
-- a first transmitting means (18, 19, 21) for transmitting a first data signal from the main unit (2) to the auxiliary unit (3); and
-- a first receiving means (22, 23, 18) for receiving a second data signal from the auxiliary unit (3); and
- said auxiliary unit (3) having the following features:
-- a clock signal generating means (8) for generating a clock signal on the basis of the alternating supply signal transmitted from the main unit (2) to the auxiliary unit (3); and
-- a second transmitting means (14, 16) for transmitting a second data signal from said auxiliary unit (3) to said main unit (2);
characterized in that the auxiliary unit (3) additionally has the following features:
-- a reference counter (9) for generating a time window, said reference counter (9) being activated upon reception of the first data signal and counting pulses of the clock signal and generating a time window signal until a count corresponding to the time window has been reached; and
-- a data counter (13) counting the oscillations of the first data signal while the time window signal is present;
-- said second transmitting means (14, 16) for transmitting a second data signal from the auxiliary unit (3) to the main unit (2) responding to the end of the time window for transmitting the second data signal from the auxiliary unit (3) to the main unit (2).

7. A system comprising a main unit (2) and an auxiliary unit (3) and used for transmitting energy from said main unit (2) to said auxiliary unit (3) and for transmitting data bidirectionally between said main unit (2) and said auxiliary unit (3),
- said main unit (2) having the following features:
-- an oscillator (19) for producing an alternating supply signal of predetermined frequency;
-- a first transmitting means (18, 19, 21) for transmitting a first data signal from the main unit (2) to the auxiliary unit (3); and
-- a first receiving means (22, 23, 18) for receiving a second data signal from the auxiliary unit (3); and
- said auxiliary unit (3) having the following features:
-- a clock signal generating means (8) for generating a clock signal on the basis of the alternating supply signal transmitted from the main unit (2) to the auxiliary unit (3); and
-- a second transmitting means (14, 16) for transmitting a second data signal from the auxiliary unit (3) to the main unit (2);
characterized in that the auxiliary unit (3) additionally has the following features:
-- a reference counter (9) for generating a time window, said reference counter (9) being activated upon reception of the first data signal and counting pulses of the clock signal and generating a time window signal until a count corresponding to the time window has been reached; and
-- a data counter (13) counting the oscillations of the first data signal while the time window signal is present;
-- said second transmitting means (14, 16) for transmitting a second data signal from the auxiliary unit (3) to the main unit (2) responding to the end of the transmission of the first data signal from said main unit (2) to said auxiliary unit (3) for transmitting the second data signal from said auxiliary unit (3) to said main unit (2).

8. A system according to claim 6 or 7, characterized in
- that the main unit (2) as well as the auxiliary unit (3) each include an energy and data transmitting element (L1a, L1b; L2a, L2b) for the transmission of energy from the main unit (2) to the auxiliary unit (3) and for the bidirectional transmission of data between these units.

9. A system according to claim 8, characterized in
- that the auxiliary unit (3) additionally has the following features:
-- a first digital control device (10, 14, 15);
-- a first transmitting and receiving switch (11) connected to said first digital control device (10, 14, 15) and to the data transmitting element (L2b) of the auxiliary unit (3);
-- a first signal-shaping circuit (12), which is connected downstream of said first transmitting and receiving switch (11) and the output side of which is connected to the data counter (13), said data counter (13) being, in turn, connected to the first digital control device (10, 14, 15) on the output side thereof;
-- a rectifier circuit (7) connected to the energy transmitting element (L1b); and
-- a second signal-shaping circuit (8), which is also connected to the energy transmitting element (L1b) and the output side of which is connected to the reference counter (9), said reference counter (9) being, in turn, connected to the first digital control device (10, 14, 15) on its output side.

10. A system according to claim 9, characterized in
- that the second transmitting means is provided with a frequency shift keying circuit (16), which is connected to the digital control device (10, 14, 15) on its input side and to the first transmitting and receiving switch (11) on its output side.

11. A system according to one of the claims 6 to 10, characterized in
- that the main unit (2) additionally has the following features:
-- a second digital control device (17, 18);
-- a second transmitting and receiving switch (21) connected to said second digital control device (17, 18) and to the data transmitting element (L2a) of the main unit (2);
--- said second transmitting and receiving switch (21) connecting, in its transmitting position, the oscillator (19) to the data transmitting element (L2a) of the main unit (2) during a gating time predetermined by the second digital control device (17, 18) in accordance with the data to be transmitted, and
--- connecting, in its receiving position, the data transmitting element (L2a) of the main unit (2) to first and second phase-locked loops (22, 23), which are connected to said second digital control device (17, 18) on their output sides.

## Revendications

1. Procédé pour le transfert d'énergie d'une unité principale à une unité auxiliaire et pour le transfert bidirectionnel de données entre l'unité principale et l'unité auxiliaire, aux étapes de procédé suivantes:
- transfert de l'énergie comme signal alternatif d'alimentation à fréquence prédéterminée de l'unité principale (2) à l'unité auxiliaire (3),
- génération d'un signal d'impulsions d'horloge pour l'unité auxiliaire à partir du signal alternatif d'alimentation transféré de l'unité principale (2) à l'unité auxiliaire (3),
- transfert d'un premier signal de données de l'unité principale (2) à l'unité auxiliaire (3), et
- transfert inversé d'un second signal de données de l'unité auxiliaire (3) à l'unité principale (2),
caractérisé par les étapes de procédé suivantes:
- comptage du nombre d'oscillations du signal d'impulsions d'horloge à partir du début de la réception du premier signal de données,
- comptage du nombre d'oscillations du premier signal de données,
- arrêt du comptage des oscillations du premier signal de données dès qu'est atteinte, lors du comptage des oscillations du signal d'impulsions d'horloge, une valeur de comptage prédéterminée qui correspond à une fenêtre de temps, et
- détermination de la première valeur de données reçue sur base de la valeur de comptage,
- le transfert inverse d'un second signal de données de l'unité auxiliaire (3) vers l'unité principale (2) s'effectuant dès qu'est atteinte, lors du comptage du signal d'impulsions d'horloge, la valeur de comptage prédéterminée qui correspond à la fenêtre de temps.

2. Procédé pour le transfert d'énergie d'une unité principale à une unité auxiliaire et pour le transfert bidirectionnel de données entre l'unité principale et l'unité auxiliaire, aux étapes de procédé suivantes:
- transfert de l'énergie comme signal alternatif d'alimentation à fréquence prédéterminée de l'unité principale (2) à l'unité auxiliaire (3),
- génération d'un signal d'impulsions d'horloge pour l'unité auxiliaire à partir du signal alternatif d'alimentation transféré de l'unité principale (2) à l'unité auxiliaire (3),
- transfert d'un premier signal de données de l'unité principale (2) à l'unité auxiliaire (3), et
- transfert inversé d'un second signal de données de l'unité auxiliaire (3) à l'unité principale (2),
caractérisé par les étapes de procédé suivantes:
- comptage du nombre d'oscillations du signal d'impulsions d'horloge à partir du début de la réception du premier signal de données,
- comptage du nombre d'oscillations du premier signal de données,
- arrêt du comptage des oscillations du premier signal de données dès qu'est atteinte, lors du comptage des oscillations du signal d'impulsions d'horloge, une valeur de comptage prédéterminée qui correspond à une fenêtre de temps, et
- détermination de la première valeur de données reçue sur base de la valeur de comptage,
- le transfert inverse d'un second signal de données de l'unité auxiliaire (3) vers l'unité principale (2) s'effectuant dès que le transfert du premier signal de données de l'unité principale (2) vers l'unité auxiliaire (3) est terminée.

3. Procédé suivant la revendication 1 ou 2, caractérisé en ce que l'unité auxiliaire (3) module le second signal de données par déplacement de fréquence à l'aide d'au moins deux fréquences.

4. Procédé suivant l'une des revendications 1 à 3, caractérisé en ce que l'unité principale module le premier signal de données en ce qu'elle génère un signal à fréquence fixe à durée d'oscillation dépendant des données.

5. Procédé suivant l'une des revendications 1 à 3, caractérisé en ce que l'unité principale module le premier signal de données par déplacement de fréquence.

6. Dispositif, composé d'une unité principale (2) et d'une unité auxiliaire (3), pour le transfert d'énergie de l'unité principale (2) à l'unité auxiliaire (3) et pour le transfert bidirectionnel de données entre l'unité principale (2) et l'unité auxiliaire (3),
- l'unité principale (2) présentant les caractéristiques suivantes:
-- un oscillateur (19), destiné à générer un signal alternatif d'alimentation à fréquence prédéterminée,
-- un premier dispositif d'émission (18, 19, 21); destiné à transférer un premier signal de données de l'unité principale (2) à l'unité auxiliaire (3), et
-- un premier dispositif de réception (22, 23, 18), destiné à recevoir un second signal de données de l'unité auxiliaire (3), et
- l'unité auxiliaire (3) présentant les caractéristiques suivantes:
-- un dispositif de génération de signaux d'impulsions d'horloge (8), destiné à générer un signal d'impulsions d'horloge à partir du signal alternatif d'alimentation transféré de l'unité principale (2) à l'unité auxiliaire (3), et
-- un second dispositif d'émission (14, 16), destiné à transférer un second signal de données de l'unité auxiliaire (3) à l'unité principale (2),
caractérisé en ce que l'unité auxiliaire (3) présente, par ailleurs, les caractéristiques suivantes:
-- un compteur de référence (9), destiné à générer une fenêtre de temps, lequel est activé lors de la réception du premier signal de données et compte les impulsions du signal d'impulsions d'horloge et génère un signal de fenêtre de temps jusqu'à ce qu'est atteinte une valeur de comptage correspondant à la fenêtre de temps, et
-- un compteur de données (13) qui compte les oscillations du premier signal de données pendant la présence du signal de fenêtre de temps,
-- le second dispositif d'émission (14, 16) pour le transfert d'un second signal de données de l'unité auxiliaire (3) vers l'unité principale (2) réagissant au déroulement de la fenêtre de temps pour transférer le second signal de données de l'unité auxiliaire (3) vers l'unité principale (2).

7. Dispositif, composé d'une unité principale (2) et d'une unité auxiliaire (3), pour le transfert d'énergie de l'unité principale (2) à l'unité auxiliaire (3) et pour le transfert bidirectionnel de données entre l'unité principale (2) et l'unité auxiliaire (3),
- l'unité principale (2) présentant les caractéristiques suivantes:
-- un oscillateur (19), destiné à générer un signal alternatif d'alimentation à fréquence prédéterminée,
-- un premier dispositif d'émission (18, 19, 21), destiné à transférer un premier signal de données de l'unité principale (2) à l'unité auxiliaire (3), et
-- un premier dispositif de réception (22, 23, 18), destiné à recevoir un second signal de données de l'unité auxiliaire (3), et
- l'unité auxiliaire (3) présentant les caractéristiques suivantes:
-- un dispositif de génération de signaux d'impulsions d'horloge (8), destiné à générer un signal d'impulsions d'horloge à partir du signal alternatif d'alimentation transféré de l'unité principale (2) à l'unité auxiliaire (3), et
-- un second dispositif d'émission (14, 16), destiné à transférer un second signal de données de l'unité auxiliaire (3) à l'unité principale (2),
caractérisé en ce que l'unité auxiliaire (3) présente, par ailleurs, les caractéristiques suivantes:
-- un compteur de référence (9), destiné à générer une fenêtre de temps, lequel est activé lors de la réception du premier signal de données et compte les impulsions du signal d'impulsions d'horloge et génère un signal de fenêtre de temps jusqu'à ce qu'est atteinte une valeur de comptage correspondant à la fenêtre de temps, et
-- un compteur de données (13) qui compte les oscillations du premier signal de données pendant la présence du signal de fenêtre de temps,
-- le second dispositif d'émission (14, 16) pour le transfert d'un second signal de données de l'unité auxiliaire (3) vers l'unité principale (2) réagissant à la fin du transfert du premier signal de données de l'unité principale (2) vers l'unité auxiliaire (3) pour transférer le second signal de données de l'unité auxiliaire (3) vers l'unité principale (2).

8. Dispositif suivant la revendication 6 ou 7, caractérisé en ce que tant l'unité principale (2) que l'unité auxiliaire (3) présentent, chacune, un élément de transfert de données (L1a, L1b; L2a, L2b) pour le transfert d'énergie de l'unité principale (2) vers l'unité auxiliaire (3) et pour le transfert bidirectionnel de données entre celles-ci.

9. Dispositif suivant la revendication 8, caractérisé en ce que
- l'unité auxiliaire (3) présente, par ailleurs, les caractéristiques suivantes:
-- un premier dispositif de commande numérique (10, 14, 15).
-- un premier commutateur d'émission/réception (11) connecté au premier dispositif de commande numérique (10, 14, 15) et à l'élément de transfert de données (L2b) de l'unité auxiliaire (3),
-- un premier circuit de formation de signal (12), connecté après le premier commutateur d'émission/réception (11), qui est relié, côté sortie, au compteur de données (13) qui est, à son tour, relié, côté sortie, au premier dispositif de commande numérique (10, 14, 15),
-- un circuit de redressement (7) raccordé à l'élément de transfert d'énergie (L1b), et
-- un second circuit de formation de signal, également raccordé à l'élément de transfert d'énergie (L1b), qui est relié, côté sortie, au compteur de référence (9) qui est, à son tour, relié, côté sortie, au premier dispositif de commande numérique (10, 14, 15).

10. Dispositif suivant la revendication 9, caractérisé en ce que le second dispositif d'émission présente un circuit de déplacement de fréquence (16) qui est relié, côté entrée, au dispositif de commande numérique (10, 14, 15) et, côté sortie, au premier commutateur d'émission/réception (11).

11. Dispositif suivant l'une des revendications 6 à 10, caractérisé en ce que
- l'unité principale (2) présente, en outre, les caractéristiques suivantes:
-- un second dispositif de commande numérique (17, 18),
-- un second commutateur d'émission/réception (11) connecté au second dispositif de commande numérique (17, 18) et à l'élément de transfert de données (L2a) de l'unité principale (2) qui,
--- dans sa position d'émission, relie l'oscillateur (19), pendant un temps de porte prédéterminé par le second dispositif de commande numérique (17, 18) en fonction des données à émettre, à l'élément de transfert de données (L2a) de l'unité principale (2), et
--- dans sa position de réception, relie l'élément de transfert de données (L2a) de l'unité principale (2) à une première et une seconde boucle de réglage à phases rigides (22, 23) qui sont reliées, côté sortie, au second dispositif de commande numérique (17, 18).
